# EUROPEAN PATENT APPLICATION

(11) **EP 2 816 742 A1**
(43) Date of publication of application: **24.12.2014**
(21) Application number: 12870330.3
(22) Date of filing: 26.11.2012
(51) Int. Cl.: H04B 10/07

(54) **OPTICAL PORT CONNECTION MANAGEMENT METHOD, FLANGE, FIBRE JUMPER AND OPTICAL NETWORK DEVICE**

(71) Applicant: Huawei Technologies Co., Ltd., Shenzen, Guangdong 518129 (CN)
(72) Inventor: MA, Yarong, Shenzhen, Guangdong 518129 (CN); CHANG, Tianhai, Shenzhen, Guangdong 518129 (CN); HUANG, Wei, Shenzhen, Guangdong 518129 (CN)
(74) Representative: Pfenning, Meinig & Partner GbR
(86) International application number: PCT/CN2012/085266
(87) International publication number: WO 2014/079062

(57) **Abstract**

Embodiments of the present invention relate to a connection management method of an optical port, a flange plate, a fiber patch cord, and an optical network device. One method includes: acquiring, by a first device, first port identification information corresponding to a first port of the first device; and sending, by the first device through a first transmission line in a fiber patch cord connected to the first port, the first port identification information to a second port of a second device connected to the fiber patch cord, where the first port and the second port transmit an optical signal through a second transmission line in the fiber patch cord. The embodiments of the present invention facilitate checking of a connection relationship of an optical port of a device, and reduce costs.

## Description

### TECHNICAL FIELD

Embodiments of the present invention relate to the field of communications technologies, and in particular, to a connection management method of an optical port, a flange plate, a fiber patch cord, and an optical network device.

### BACKGROUND

A dense wavelength division multiplexing (Dense Wavelength Division Multiplexing, DWDM) transmission system has different node types. For nodes such as an optical terminal multiplexer (optical terminal multiplexing, OTM), a fixed optical add or drop multiplexer (Fixed Optical Add or Drop Multiplexer, FOADM), and a reconfigurable optical add or drop multiplexer (Reconfigurable Optical Add or Drop Multiplexer, ROADM), there are multiple interconnections of optical ports between boards. In one direction of some nodes, at most more than 80 optical fibers are used for interconnections between different boards, and some nodes have multiple directions, which easily causes an incorrect connection problem of an optical fiber.

In the prior art, a radio frequency identification (radio frequency identify, RFID) and a transmit antenna are set on both an optical port of a device and a two-way connector of a flange plate and a fiber patch cord which are connected to the optical port of the device. When a loop of the port is formed after the fiber patch cord is connected to the flange plate, the RFID identification is sent out through an antenna on the fiber patch cord. An external card reader or a card reading apparatus built in the board may be used to read the RFID identification, and the read information is sent to a network management center, so that the network management center performs distribution management according to whether the connection of the RFID identification to the optical port of the device is correct.

However, in the prior art, sending of the identification and checking of a connection relationship of the optical port may only be performed when RFIDs are set on the optical port of the device which needs to be interconnected and on a connector of the fiber patch cord. A check process is complex, and costs are comparatively high.

### SUMMARY

Embodiments of the present invention provide a connection management method of an optical port, a flange plate, a fiber patch cord, and an optical network device, so as to check a connection relationship of an optical port of a device and reduce costs.

In a first aspect, an embodiment of the present invention provides a connection management method of an optical port, including:
acquiring, by a first device, first port identification information corresponding to a first port of the first device; and
sending, by the first device through a first transmission line in a fiber patch cord connected to the first port, the first port identification information to a second port of a second device connected to the fiber patch cord, where the first port and the second port transmit an optical signal through a second transmission line in the fiber patch cord.

In a first feasible implementation manner of the first aspect, the connection management method further includes: receiving, by the first device through the first port from the fiber patch cord, second port identification information sent by the second device through the second port; determining, by the first device, whether the first port identification information matches with the second port identification information; and sending out, by the first device, first indication information according to a matching result.

In a second feasible implementation manner of the first aspect, the sending out, by the first device, indication information according to a matching result includes: sending out, by the first device, the first indication information through an indicator light disposed on the first port.

In a third feasible implementation manner of the first aspect, after the determining, by the first device, whether the first port identification information matches with the second port identification information, the connection management method further includes: reporting, by the first device, first error information to a management device if the first port identification information does not match with the second port identification information, where the first error information carries the second port identification information, so as to enable the management device to determine, according to the second port identification information, a correct port connected to the second port.

In a second aspect, an embodiment of the present invention further provides a connection management method of an optical port, including:
receiving, by a second device through a first transmission line in a fiber patch cord connected to a second port, first port identification information sent by a first port of a first device, where the first port and the second port transmit an optical signal through a second transmission line in the fiber patch cord;
determining, by the second device, whether the first port identification information matches with second port identification information corresponding to the second port; and
sending out, by the second device, second indication information according to a matching result.

In a first feasible implementation manner of the second aspect, the sending out, by the second device, second indication information according to a matching result includes: sending out, by the second device, the second indication information through an indicator light disposed on the second port.

In a second feasible implementation manner of the second aspect, after the sending out, by the second device, second indication information according to a matching result, the connection management method further includes: reporting, by the second device, second error information to a management device if the first port identification information does not match with the second port identification information, where the second error information carries the first port identification information, so as to enable the management device to determine, according to the first port identification information, a correct port connected to the first port.

In a third aspect, an embodiment of the present invention further provides a flange plate, including an internal conductive module and an external conductive module, where the internal conductive module is electrically connected to the external conductive module;
the external conductive module is connected to a first transmission line and a second transmission line in a fiber patch cord, where the first transmission line is configured to transmit port identification information corresponding to a port of an optical network device, and the second transmission line is configured to transmit an optical signal; and
the internal conductive module is electrically connected to a card of the optical network device, and is configured to transmit, between the external conductive module and the card, the port identification information and the optical signal.

In a fourth aspect, an embodiment of the present invention further provides an optical network device, including: at least one first port, at least one flange plate, and a card, where one flange plate is disposed on each first port;
the card is configured to acquire first port identification information corresponding to the first port of the device; and
the flange plate is configured to send, through a first transmission line in a connected fiber patch cord, the first port identification information to a second port of a second device connected to the fiber patch cord, where the first port and the second port transmit an optical signal through a second transmission line in the fiber patch cord.

In a first feasible implementation manner of the fourth aspect, the flange plate is further configured to: receive, from the fiber patch cord, second port identification information sent by the second device through the second port; and the card is further configured to: determine whether the first port identification information matches with the second port identification information and send out first indication information according to a matching result.

In a second feasible implementation manner of the fourth aspect, an indicator light is further disposed on the first port; and the card is specifically configured to: send out the first indication information through the indicator light disposed on the first port.

In a third feasible implementation manner of the fourth aspect, the card is further configured to: report first error information to a management device if the first port identification information does not match with the second port identification information, where the first error information carries the second port identification information, so as to enable the management device to determine, according to the second port identification information, a correct port connected to the second port.

In a fifth aspect, an embodiment of the present invention further provides an optical network device, including: at least one second port, at least one flange plate, and a card, where one flange plate is disposed on each second port;
the flange plate is configured to receive, through a first transmission line in a connected fiber patch cord, first port identification information sent by a first port of a first device, where the first port and the second port transmit an optical signal through a second transmission line in the fiber patch cord; and
the card is configured to determine whether the first port identification information matches with second port identification information corresponding to the second port; and send out second indication information according to a matching result.

In a first feasible implementation manner of the fifth aspect, an indicator light is further disposed on the second port; and the card is specifically configured to: send out the second indication information through the indicator light disposed on the second port.

In a second feasible implementation manner of the fifth aspect, the card is further configured to: report second error information to a management device if the first port identification information does not match with the second port identification information, where the second error information carries the first port identification information, so as to enable the management device to determine, according to the first port identification information, a correct port connected to the first port.

In a third feasible implementation manner of the fifth aspect, the flange plate is further configured to: send the second port identification information to the first port through the first transmission line in the fiber patch cord if the first port identification information does not match with the second port identification information.

In a sixth aspect, an embodiment of the present invention further provides a fiber patch cord, including two connectors, where the two connectors are connected by a first transmission line and a second transmission line;
the connector is configured to connect to a port of an optical network device;
the first transmission line is configured to transmit, between connected optical network devices, port identification information of the optical network devices; and
the second transmission line is configured to transmit, between the connected optical network devices, an optical signal.

In a first feasible implementation manner of the sixth aspect, an optical power regulator is further disposed on at least one connector or on the second transmission line and is configured to regulate power of the optical signal.

The embodiments of the present invention provide a connection management method of an optical port, a flange plate, a fiber patch cord, and an optical network device. Port identification information of optical network devices is transmitted between the optical network devices through a first transmission line disposed in the fiber patch cord, and whether ports of two optical network devices connected through the fiber patch cord match with each other is determined according to the transmitted port identification information, so as to check a connection relationship of an optical port of a device, and reduce costs.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flow chart of a connection management method of an optical port according to an embodiment of the present invention;
FIG. 2 is a flow chart of a connection management method of an optical port according to another embodiment of the present invention;
FIG. 3 is a schematic structural diagram of a flange plate according to an embodiment of the present invention;
FIG. 4 is a schematic structural diagram of a fiber patch cord according to an embodiment of the present invention;
FIG. 5 is a schematic structural diagram of an optical network device according to an embodiment of the present invention;
FIG. 6 is a schematic structural diagram of an optical network device according to another embodiment of the present invention;
FIG. 7 is a schematic structural diagram of an optical network device according to still another embodiment of the present invention;
FIG. 8 is a schematic structural diagram of an optical network device according to still another embodiment of the present invention; and
FIG. 9 is a schematic structural diagram of an optical network device according to still another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

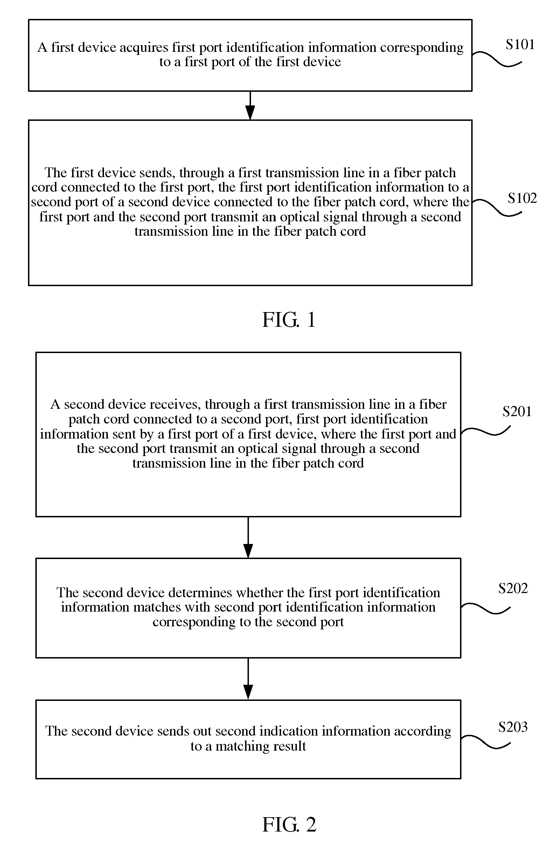

FIG. 1 is a flow chart of a connection management method of an optical port according to an embodiment of the present invention, and as shown in FIG. 1, the method includes:
S101: A first device acquires first port identification information corresponding to a first port of the first device; and
S102: The first device sends, through a first transmission line in a fiber patch cord connected to the first port, the first port identification information to a second port of a second device connected to the fiber patch cord, where the first port and the second port transmit an optical signal through a second transmission line in the fiber patch cord.

The first device and the second device involved in this embodiment of the present invention may be any optical network device in an optical communication system, such as an OTM device, an FOADM device, and an ROADM device. The first device and the second device may be the same optical network device or different optical network devices. These devices generally each have multiple ports used to connect to another optical network device. In this embodiment, any port of the first device is called the first port, and any port of the second device is called the second port.

The fiber patch cord involved in this embodiment of the present invention refers to a fiber patch cord having two connectors, where each connector is configured to connect to one port of the optical network device, and the two connectors are connected by the first transmission line and the second transmission line. The first transmission line may be a transmission medium capable of transmitting an electrical signal, such as a metal wire, and the second transmission line may be a transmission medium capable of transmitting an optical signal, such as a fiber. That is to say, in a production stage of an optical fiber patch cord, the first transmission line and the second transmission line are disposed in the same fiber patch cord, so that between two optical network devices whose ports are connected by using the fiber patch cord, electrical signal information may be transmitted through the first transmission line, and the optical signal may also be transmitted through the second transmission line, that is, a normal service transmission of the optical communication system is performed.

Each port of the optical network device may have corresponding port identification information, for example: the first port of the first device has the first port identification information, and the second device has second port identification information. The port identification information may be information such as, site information of the optical network device, subrack information, slot information, and an optical port group thereof. The port identification information may be configured on a card of the optical network device in advance, or may be delivered to the card of the optical network device through an external management device. It should be noted that, as for two ports (may be located on the same optical network device, or located on different optical network devices) which need to be connected, port identification information corresponding to the two ports need to be matched during configuration, for example, the port identification information corresponding to the two ports may be the same, may include the same identification, or the like.

The following takes a checking process of a port connection after the first port of the first device is connected to the second port of the second device through the fiber patch cord as an example for detailed description.

The first device may first acquire the first port identification information corresponding to the first port, and send the first port identification information to the second port of the second device through the fiber patch cord. Specifically, a card of the first device may acquire the first port identification information and send the first port identification information to the second port of the second device through the first port and the fiber patch cord sequentially. After acquiring the first port identification information, the second device may determine whether the first port identification information matches with the second port identification information corresponding to the second port, that is, the second device performs an operation such as determining whether the first port identification information is the same as the second port identification information corresponding to the second port, or whether they include the same identification. Further, the second device may send out second indication information according to a matching result. The second indication information may be displayed through a component having a display function. The component may be a nixie tube, a light emitting diode, an indicator light, or the like, and the matching result may be indicated through different colors, turning on, turning off, flickering, or the like of the indicator light. For example, the indicator light being green may indicate that the first port identification information matches with second port information, and the indicator light being red may indicate that the first port identification information does not match with the second port information.

In the connection management method of the optical port provided in this embodiment of the present invention, port identification information of optical network devices is transmitted between the optical network devices through a first transmission line disposed in a fiber patch cord, and whether ports of two optical network devices connected through the fiber patch cord match with each other is determined according to the transmitted port identification information, so as to check a connection relationship of an optical port of a device and reduce costs.

FIG. 2 is a flow chart of a connection management method of an optical port according to another embodiment of the present invention, and as shown in FIG. 2, the method includes;
S201: A second device receives, through a first transmission line in a fiber patch cord connected to a second port, first port identification information sent by a first port of a first device, where the first port and the second port transmit an optical signal through a second transmission line in the fiber patch cord;
S202: The second device determines whether the first port identification information matches with second port identification information corresponding to the second port; and
S203: The second device sends out second indication information according to a matching result.

After the second device performs matching between the second port identification information and the first port identification information, if the two are matched, it indicates that a logic fiber connection between the first port and the second port is correct, and in this implementation scenario, the second device may send out, through various display parts, second indication information used to indicate matching.

If the second device determines that the second port identification information does not match with the first port identification information, the second device may send out, through various display parts, second indication information used to indicate not matching. In this implementation scenario, the second device may report second error information to a management device, where the second error information carries the first port identification information, so as to enable the management device to determine, according to the first port identification information, a correct port connected to the first port.

If the second device determines that the second port identification information does not match with the first port identification information, further, the second device may send the second port identification information to the first port of the first device through the fiber patch cord. After the first device receives, through the first port from the fiber patch cord, the second port identification information sent by the second device through the second port, the first device may determine whether the first port identification information matches with the second port identification information, and send out first indication information according to a matching result.

Similarly, the first indication information may be displayed through a component having a display function. The component may be a nixie tube, a light emitting diode, an indicator light, or the like, and the matching result may be indicated through different colors, turning on, turning off, flickering, or the like of the indicator light. For example, the indicator light being green may indicate that the first port identification information matches with second port information, and the indicator light being red may indicate that the first port identification information does not match with the second port information.

The first device may report first error information to the management device if the first device determines that the first port identification information does not match with the second port identification information, where the first error information carries the second port identification information, so as to enable the management device to determine, according to the second port identification information, a correct port connected to the second port.

Specifically, the management device may be an apparatus arranged outside an optical network device, or may be a module integrated with a certain optical network device. The management device may compare received port identification information, such as the first port identification information sent by the second device and the second port identification information sent by the first device, with a preset logic fiber connection relationship. For example, a logic fiber connection of the first port of the first device should be a third port of a third device, and if port identification information received by the first port of the first device is the second port identification information of the second device, it indicates that the logic fiber connection is incorrect, that is, the management device is capable of analyzing an incorrect location (a device port) for a fiber connection, and analyzing to obtain a correct location for connection, thereby guiding on-site construction personnel to connect the fiber patch cord correctly according to location information for a correct connection.

In the connection management method of the optical port provided in this embodiment of the present invention, port identification information of optical network devices is transmitted between the optical network devices through a first transmission line disposed in a fiber patch cord, and whether ports of two optical network devices connected through the fiber patch cord match with each other is determined according to the transmitted port identification information, so as to check a connection relationship of an optical port of a device and reduce costs. Further, the optical network device, after determining whether port identification information sent by an optical network device connected thereto is matched with the port identification information of the port of this device, may further send the port identification information sent by an unmatched optical network device connected thereto to the management device, so that the management device analyzes to obtain a port location for the correct connection, thereby guiding the on-site construction personnel to connect the fiber patch cord correctly according to the location information for the correct connection.

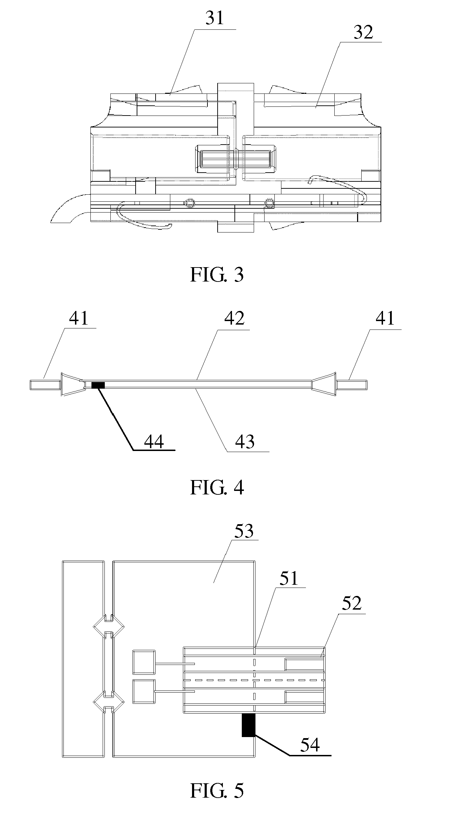

FIG. 3 is a schematic structural diagram of a flange plate according to an embodiment of the present invention, and as shown in FIG. 3, the flange plate may include: an internal conductive module 31 and an external conductive module 32, where the internal conductive module 31 is electrically connected to the external conductive module 32;
the external conductive module 31 is connected to a first transmission line and a second transmission line in a fiber patch cord, where the first transmission line is configured to transmit port identification information corresponding to a port of an optical network device, and the second transmission line is configured to transmit an optical signal; and
the internal conductive module 32 is electrically connected to a card of the optical network device, and is configured to transmit, between the external conductive module and the card, the port identification information and the optical signal.

The external conductive module 31 in the flange plate is configured to connect to a connector of an external fiber patch cord of the optical network device, and the other connector of the fiber patch cord may be connected to another optical network device or another card. The internal conductive module 32 is configured to connect to a card of an optical network device having the flange plate or a PCB board inside the card, or connect to an OTU board, so that an electrical signal (the port identification information) sent by the external fiber patch cord is transmitted through the flange plate to the card of the optical network device having the flange plate or the PCB board inside the card, or is connected to the OTU board. Specifically, an elastic dielectric may be disposed at a joint between the external conductive module 31 and the connector of the fiber patch cord, so that the external conductive module 32 is electrically connected to the first transmission line of the fiber patch cord. Similarly, an elastic dielectric may be also disposed at a joint between the internal conductive module 32 and the card, the PCB board inside the card, or the OTU board, so as to be electrically connected to the card, the PCB board inside the card, or the OTU board.

FIG. 4 is a schematic structural diagram of a fiber patch cord according to an embodiment of the present invention, and as shown in FIG. 4, the fiber patch cord includes two connectors 41, and the two connectors 41 are connected by a first transmission line 42 and a second transmission line 43;
the connector 41 is configured to connect to a port of an optical network device;
the first transmission line 42 is configured to transmit, between connected optical network devices, port identification information of the optical network devices; and
the second transmission line 43 is configured to transmit, between the connected optical network devices, an optical signal.

The fiber patch cord involved in this embodiment of the present invention refers to a fiber patch cord having two connectors 41, where each connector 41 is configured to connect to one port of the optical network device, and the two connectors are connected by the first transmission line 42 and the second transmission line 43. The first transmission line 42 may be a transmission medium that is capable of transmitting an electrical signal and formed by one or more metal wires, and the second transmission line 43 may be a transmission medium that is capable of transmitting an optical signal and formed by one or more fibers. That is to say, in a production stage of the fiber patch cord, the first transmission line 42 and the second transmission line 43 are disposed in the same fiber patch cord, so that between two optical network devices whose ports are connected by using the fiber patch cord, electrical signal information may be transmitted through the first transmission line 42, and the optical signal may also be transmitted through the second transmission line 43, that is, a normal service transmission of an optical communication system is performed.

Alternatively, an optical power regulator 44 is further disposed on at least one connector 41 or on the second transmission line 43, and is configured to regulate power of the optical signal. In some scenarios for optical fiber check, the optical power regulator 44 needs to be connected between the optical network devices, such as a fixed optical attenuator or a manual variable optical attenuator. The optical power regulator 44 may be disposed on the connectors of the fiber patch cord or on the second transmission line between the two connectors 41.

FIG. 5 is a schematic structural diagram of an optical network device according to an embodiment of the present invention, and as shown in FIG. 15, the optical network device includes: at least one first port 51, at least one flange plate 52, and a card 53, where one flange plate 52 is disposed on each first port 51;
the card 53 is configured to acquire first port identification information corresponding to the first port 51 of the device; and
the flange plate 52 is configured to send, through a first transmission line in a connected fiber patch cord, the first port identification information to a second port of a second device connected to the fiber patch cord, where the first port 51 and the second port transmit an optical signal through a second transmission line in the fiber patch cord.

Alternatively, the flange plate 52 may be further configured to: receive, from the fiber patch cord, second port identification information sent by the second device through the second port; and
alternatively, the card 53 is further configured to: determine whether the first port identification information matches with the second port identification information; and send out first indication information according to a matching result.

Alternatively, an indicator light 54 may be further disposed on the first port 51; and
the card 53 may be further specifically configured to: send out the first indication information through the indicator light 54 disposed on the first port 51.

Alternatively, the card 53 may be further configured to: report first error information to a management device if the first port identification information does not match with the second port identification information, where the first error information carries the second port identification information, so as to enable the management device to determine, according to the second port identification information, a correct port connected to the second port.

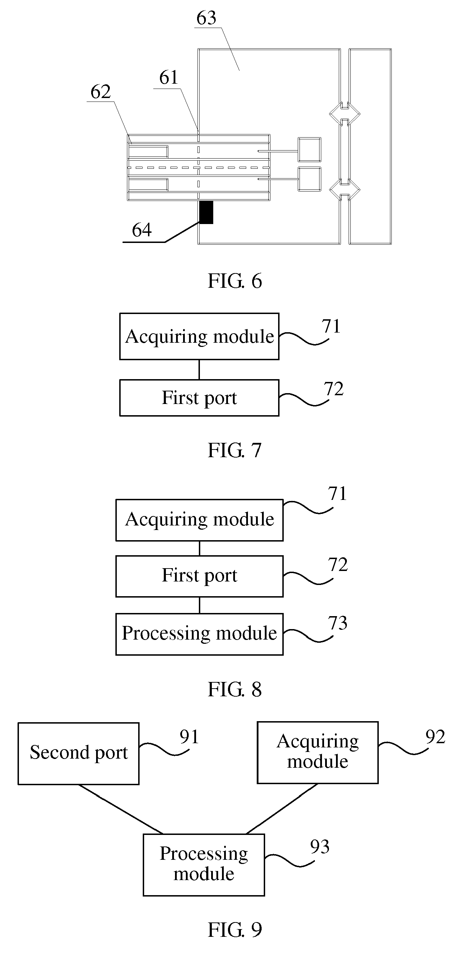

FIG. 6 is a schematic structural diagram of an optical network device according to another embodiment of the present invention, and as shown in FIG. 6, the optical network device includes: at least one second port 61, at least one flange plate 62, and a card 63, where one flange plate 62 is disposed on each second port 61;
the flange plate 62 is configured to receive, through a first transmission line in a connected fiber patch cord, first port identification information sent by a first port of a first device, where the first port and the second port transmit an optical signal through a second transmission line in the fiber patch cord; and
the card 63 is configured to determine whether the first port identification information matches with second port identification information corresponding to the second port; and send out second indication information according to a matching result.

Alternatively, an indicator light 64 may be further disposed on the second port 61; and
the card 63 may be specifically configured to: send out the second indication information through the indicator light 64 disposed on the second port 61.

Alternatively, the card 63 may be further configured to: report second error information to a management device if the first port identification information does not match with the second port identification information, where the second error information carries the first port identification information, so as to enable the management device to determine, according to the first port identification information, a correct port connected to the first port.

Alternatively, the flange plate 62 may be further configured to: send the second port identification information to the first port through the first transmission line in the fiber patch cord if the first port identification information does not match with the second port identification information.

The optical network device provided in this embodiment of the present invention corresponds to the connection management method of the optical port provided in the embodiment of the present invention. For a procedure for the optical network device to perform the connection management method of the optical port, reference may be made to a relevant description in the embodiments shown in FIG. 1 and FIG. 2, which is not described herein again.

According to the optical network device provided in this embodiment of the present invention, between optical network devices, port identification information of the optical network devices is transmitted through a first transmission line disposed in a fiber patch cord, and whether ports of two optical network devices connected through the fiber patch cord match with each other is determined according to the transmitted port identification information, so as to check a connection relationship of an optical port of the device and reduce costs.

FIG. 7 is a schematic structural diagram of an optical network device according to still another embodiment of the present invention, and as shown in FIG. 7, the optical network device includes an acquiring module 71 and at least one first port 72;
the acquiring module 71 is configured to acquire first port identification information corresponding to the first port 72 of the device; and
the first port 72 is configured to send, through a first transmission line in a fiber patch cord connected to the first port 72, the first port identification information to a second port of a second device connected to the fiber patch cord, where a first port and the second port transmit an optical signal through a second transmission line in the fiber patch cord.

Alternatively, the first port 72 may be further configured to: receive, from the fiber patch cord, second port identification information sent by the second device through the second port.

FIG. 8 is a schematic structural diagram of an optical network device according to still another embodiment of the present invention, and as shown in FIG. 8, based on the embodiment shown in FIG. 7, the optical network device may further include: a processing module 73, configured to determine whether first port identification information matches with second port identification information; and send out first indication information according to a matching result.

Alternatively, an indicator light may be further disposed on the first port 72; and
the processing module 73 may be specifically configured to: send out the first indication information through the indicator light disposed on the first port 72.

Alternatively, the processing module 73 may be further configured to: report first error information to a management device if the first port identification information does not match with the second port identification information, where the first error information carries the second port identification information, so as to enable the management device to determine, according to the second port identification information, a correct port connected to the second port.

FIG. 9 is a schematic structural diagram of an optical network device according to still another embodiment of the present invention, and as shown in FIG. 9, the optical network device includes at least one second port 91, an acquiring module 92, and a processing module 93;
the second port 91 is configured to receive, through a first transmission line in a fiber patch cord connected to a second port, first port identification information sent by a first port of a first device, where the first port and the second port transmit an optical signal through a second transmission line in the fiber patch cord;
the acquiring module 92 is configured to acquire second port identification information corresponding to the second port of the device; and
the processing module 93 is configured to determine whether the first port identification information matches with the second port identification information corresponding to the second port; and send out second indication information according to a matching result.

Alternatively, an indicator light may be further disposed on the second port 91; and
the processing module 93 may be specifically configured to: send out the second indication information through the indicator light disposed on the second port.

Alternatively, the processing module 93 may be further configured to: report second error information to a management device if the first port identification information does not match with the second port identification information, where the second error information carries the first port identification information, so as to enable the management device to determine, according to the first port identification information, a correct port connected to the first port.

Alternatively, the second port 91 may be further configured to: send the second port identification information to the first port through the first transmission line in the fiber patch cord if the first port identification information does not match with the second port identification information.

The optical network device provided in this embodiment of the present invention corresponds to the connection management method of the optical port provided in the embodiment of the present invention. For a procedure for the optical network device to perform the connection management method of the optical port, reference may be made to a relevant description in the embodiments shown in FIG. 1 and FIG. 2, which is not described herein again.

According to the optical network device provided in this embodiment of the present invention, between optical network devices, port identification information of the optical network devices is transmitted through a first transmission line disposed in a fiber patch cord, and whether ports of two optical network devices connected through the fiber patch cord match with each other is determined according to the transmitted port identification information, so as to check a connection relationship of an optical port of the device and reduce costs.

It can be clearly understood by a person skilled in the art that, for the purpose of convenient and brief description, division of the foregoing function modules is taken as an example for illustration. In actual implementation, the foregoing functions can be allocated to different modules and implemented according to the need, that is, inner structure of the apparatus is divided into different function modules to implement all or part of the functions described above. For a detailed working process of the foregoing system, apparatus and unit, reference may be made to the corresponding process in the method embodiments, and the details will not be described herein again.

In the several embodiments provided in the present application, it should be understood that the disclosed system, apparatus, and method may be implemented in other manners. For example, the described apparatus embodiment is merely exemplary. For example, the division of the modules or units is merely logical function division and may be other division in actual implementation. For example, a plurality of units or components may be combined or integrated into another system, or some features may be ignored performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, and may also be implemented in a form of a software functional unit.

When the integrated unit are implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, or a network device) or a processor (processor) to perform all or a part of steps of the methods described in the embodiments of the present invention. The foregoing storage medium includes: media of all types that can store program code, such as a USB flash disk, a removable hard disk, a read-only memory (ROM, Read-Only Memory), a random access memory (RAM, Random Access Memory), a magnetic disk, or an optical disk.

It should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, without departing from the spirit and scope of the technical solutions of the embodiments of the present invention.

## Claims

1. A connection management method of an optical port, comprising:
acquiring, by a first device, first port identification information corresponding to a first port of the first device; and
sending, by the first device through a first transmission line in a fiber patch cord connected to the first port, the first port identification information to a second port of a second device connected to the fiber patch cord, wherein the first port and the second port transmit an optical signal through a second transmission line in the fiber patch cord.

2. The method according to claim 1, further comprising:
receiving, by the first device through the first port from the fiber patch cord, second port identification information sent by the second device through the second port;
determining, by the first device, whether the first port identification information matches with the second port identification information; and
sending out, by the first device, first indication information according to a matching result.

3. The method according to claim 2, wherein the sending out, by the first device, indication information according to a matching result comprises:
sending out, by the first device, the first indication information through an indicator light disposed on the first port.

4. The method according to claim 2 or 3, after the determining, by the first device, whether the first port identification information matches with the second port identification information, further comprising:
reporting, by the first device, first error information to a management device if the first port identification information does not match with the second port identification information, wherein the first error information carries the second port identification information, so as to enable the management device to determine, according to the second port identification information, a correct port connected to the second port.

5. A connection management method of an optical port, comprising:
receiving, by a second device through a first transmission line in a fiber patch cord connected to a second port, first port identification information sent by a first port of a first device, wherein the first port and the second port transmit an optical signal through a second transmission line in the fiber patch cord;
determining, by the second device, whether the first port identification information matches with second port identification information corresponding to the second port; and
sending out, by the second device, second indication information according to the matching result.

6. The method according to claim 5, wherein the sending out, by the second device, second indication information according to the matching result comprises:
sending out, by the second device, the second indication information through an indicator light disposed on the second port.

7. The method according to claim 5 or 6, after the determining, by the second device, whether the first port identification information matches with second port identification information corresponding to the second port, further comprising:
reporting, by the second device, second error information to a management device if the first port identification information does not match with the second port identification information, wherein the second error information carries the first port identification information, so as to enable the management device to determine, according to the first port identification information, a correct port connected to the first port.

8. The method according to any one of claims 5 to 7, after the determining, by the second device, whether the first port identification information matches with second port identification information corresponding to the second port, further comprising:
sending, by the second device through the first transmission line in the fiber patch cord connected to the second port, the second port identification information to the first port if the first port identification information does not match with the second port identification information.

9. A flange plate, comprising an internal conductive module and an external conductive module, wherein the internal conductive module is electrically connected to the external conductive module;
the external conductive module is connected to a first transmission line and a second transmission line in a fiber patch cord, wherein the first transmission line is configured to transmit port identification information corresponding to a port of an optical network device, and the second transmission line is configured to transmit an optical signal; and
the internal conductive module is electrically connected to a card of the optical network device, and is configured to transmit, between the external conductive module and the card, the port identification information and the optical signal.

10. An optical network device, comprising at least one first port, at least one flange plate according to claim 9, and a card, wherein one flange plate is disposed on each first port;
the card is configured to acquire first port identification information corresponding to the first port of the device; and
the flange plate is configured to send, through a first transmission line in a connected fiber patch cord, the first port identification information to a second port of a second device connected to the fiber patch cord, wherein the first port and the second port transmit an optical signal through a second transmission line in the fiber patch cord.

11. The optical network device according to claim 10, wherein the flange plate is further configured to: receive, from the fiber patch cord, second port identification information sent by the second device through the second port; and
the card is further configured to: determine whether the first port identification information matches with the second port identification information; and send out first indication information according to a matching result.

12. The optical network device according to claim 11, wherein an indicator light is further disposed on the first port; and
the card is specifically configured to: send out the first indication information through the indicator light disposed on the first port.

13. The optical network device according to claim 11 or 12, wherein the card is further configured to: report first error information to a management device if the first port identification information does not match with the second port identification information, wherein the first error information carries the second port identification information, so as to enable the management device to determine, according to the second port identification information, a correct port connected to the second port.

14. An optical network device, comprising at least one second port, at least one flange plate according to claim 9, and a card, wherein one flange plate is disposed on each second port;
the flange plate is configured to receive, through a first transmission line in a connected fiber patch cord, first port identification information sent by a first port of a first device, wherein the first port and the second port transmit an optical signal through a second transmission line in the fiber patch cord; and
the card is configured to determine whether the first port identification information matches with second port identification information corresponding to the second port; and send out second indication information according to the matching result.

15. The optical network device according to claim 14, wherein an indicator light is further disposed on the second port; and
the card is specifically configured to: send out the second indication information through the indicator light disposed on the second port.

16. The optical network device according to claim 14 or 15, wherein the card is further configured to: report second error information to a management device if the first port identification information does not match with the second port identification information, wherein the second error information carries the first port identification information, so as to enable the management device to determine, according to the first port identification information, a correct port connected to the first port.

17. The optical network device according to any one of claims 14 to 16, wherein the flange plate is further configured to: send the second port identification information to the first port through the first transmission line in the fiber patch cord if the first port identification information does not match with the second port identification information.

18. A fiber patch cord, comprising two connectors, wherein the two connectors are connected by a first transmission line and a second transmission line;
the connector is configured to connect to a port of an optical network device;
the first transmission line is configured to transmit, between connected optical network devices, port identification information of the optical network devices; and
the second transmission line is configured to transmit, between the connected optical network devices, an optical signal.

19. The fiber patch cord according to claim 18, wherein an optical power regulator is further disposed on at least one connector or on the second transmission line, and is configured to regulate power of the optical signal.
